# EUROPEAN PATENT APPLICATION

(11) **EP 4 059 899 A1**
(43) Date of publication of application: **21.09.2022**
(21) Application number: 22020115.6
(22) Date of filing: 18.03.2022
(51) Int. Cl.: C02F 1/00, B01D 24/02, B01D 24/46, E03B 3/04, E03B 5/00, C02F 103/00

(54) **AN ARRANGEMENT AND A METHOD OF PRE-FILTRATING A NATURAL WATER TRANSFERRING WATER PUMP**

(30) Priority: 19.03.2021 FI 20217053
(71) Applicant: Turun Seudun Vesiliike Oy, 21100 Naantali (FI)
(72) Inventor: Aaltonen, Mikko, 20960 Turku (FI)
(74) Representative: Salonen, Kauko Tuomas

(57) **Abstract**

An arrangement and a method of pre-filtrating a natural water transferring water pump (36, 36 '), which arrangement comprises a first vessel (12) immersed in a natural water source (10), having a watertight bottom (14) and a watertight side wall surface (16) and a bed (22) of granular filtration material arranged in the lower portion (20) of the first vessel, preferably a sand bed, a second vessel (24) watertight relative to the natural water source, having a roof (26) and a side wall surface (30), the second vessel being in water flow connection with the lower portion of the first vessel (12), a water pump (36, 36 ') for passing filtered water from the first vessel (12) via said water flow connection to the second vessel (24) and further from the second vessel along a water pipe (40) to water use (38, 38'), a countercurrent flushing arrangement of the bed of filtration material, comprising a flushing fluid supply pipe (48), the first end of which having means for generating flushing fluid pulses (42, 62, 52), and the second end of which being fluid flow connection with the first vessel (12), and means (46) for distributing the pulses of flushing fluid to the lower portion of the bed of filtration material, wherein the upper portion (18) of the first vessel is in a by the hydrostatic pressure of the natural water source driven water flow communication with the natural water source (10).

## Description

### FIELD OF THE INVENTION

The invention relates to an arrangement of pre-filtrating a natural water transferring water pump as defined in the preamble of claim 1 and to a method of pre-filtrating a natural water transferring water pump as defined in the preamble of claim 7. In particular, the invention relates to the pre-filtration of natural water for use in households or for other relatively low-consumption needs.

### BACKGROUND OF THE INVENTION

To many households, especially summer cottages, and to other relatively low-consumption needs is often taken consumption water by utilizing raw water from a suitable natural water source, such as a lake, river, or brackish water, i.e., low-salt seawater. When the water is to be consumed through a tap or a shower, for example, the water pressure must be raised by a water pump installed in a suitable place in a water transfer pipe. The water pump can be placed either in a warm interior or immersed inside a natural water source. Sand, algae, pollen, leaves and needles or other detritus is often carried by the natural water. Since such solid particles are detrimental to the operation of the water pump, they should be removed from the water by pre-filtration before the pump, i.e. on the suction side of the pump. Natural water can also have taste and odor nuisances, which is why various filter devices are often placed in the pressurized part of the water transfer pipe, i.e. on the outlet side of the pump, in order to remove any harmful impurities left in the water.

One known way of removing solids from natural water is to connect a suitable filter cartridge or a suction filter made, for example, of strong nylon to the suction side of the pump as a coarse filter, for example inside a natural water source. Thereby, the solids removed from the water remain in the filtration material, and the pressure drop caused by the filter increases, which means that the filter must be replaced or cleaned from time to time. In particular, a problem may be that cyanobacteria with possible toxins accumulate in the filter cartridge. Rotorflush Filters Ltd manufactures and sells submersible pumps with a self-cleaning intake screen integrated on the suction side which intake screen is self-cleaned by recirculated water and water flow driven impeller. Often a problem with submersible pumps located directly in natural water is the entry of harmful vegetation or small animals, such as barnacles, into the pump structures.

German patent DE 43 35 104 C2 describes a solution in which dirty natural water is purified in a pressure tank by first removing most of the contaminants by binding them to small air bubbles formed in the water, after which the remaining contaminants are filtered in a sand bed formed at the bottom of the tank. The increase in pressure drop caused by particles remaining in the sand is reduced by countercurrent flushing, which is done by periodically pumping purified water upstream through the sand bed. Corresponding sand filtration in basins or tanks is in itself a commonly used method for removing solid contaminants, for example as part of the drinking water production process of large water plants. In the so-called fast sand filtration, where the effective grain size of the sand can be, for example, 0.5 to 1.2 mm, the sand is regularly cleaned by countercurrent flushing. The filtration material bed may also comprise two or more layers with different grain size or composition of the filtrating material. Contaminants released during bed flushing are usually collected in special gutters located at the top of the basin or tank, by which they are led to post-treatment.

Published German patent application DE 198 10 518 A1 describes an arrangement in which a filter located after the pump, i.e. in a pressurized part of the pipeline leading from a liquid raw material reservoir to its use, is washed by countercurrent flushing. The flushing is made by bringing about a flow of cleaned liquid as rapid pulses from a pressure accumulator. The particles detached from the filter and the liquid carrying them are collected in a special waste water tank. Additional pressure can also be utilized in the generation of the pulses, which is provided by an external pump or, by means of a special valve arrangement, by the actual flow pump of the liquid.

It is an object of the present invention to provide a simple pre-filtrating arrangement of a natural water transferring water pump and a corresponding method of pre-filtrating a natural water transferring water pump, especially suitable for private household use and for other relatively low-consumption needs.

### DESCRIPTION OF THE INVENTION

The pre-filtrating arrangement of a natural water transferring water pump according to the invention is characterized by what is presented in the characterizing part of the appended independent device claim. Correspondingly, the pre-filtrating method of a natural water transferring water pump according to the invention is characterized by what is presented in the characterizing part of the appended independent method claim. Other embodiments of the invention are characterized by what is stated in the other claims.

The pre-filtrating arrangement of the natural water transferring water pump according to the invention comprises a first vessel immersed in a natural water source, preferably a lake, sea or river, comprising a watertight bottom and a watertight side wall surface and a bed of granular filtration material, preferably a sand bed, a second vessel having a watertight roof and a side wall surface, the second vessel being in water flow connection with the lower portion of the first vessel. The arrangement also comprises a water pump for transferring filtered water from the first vessel via said water flow connection to the second vessel, and further from the second vessel along a water pipe to the use, and an arrangement for countercurrent flushing of the filtration material, comprising a flushing fluid supply pipe. In a first end of the flushing fluid supply pipe are connected means for generating pulses of flushing fluid. The second end is in fluid flow connection with the first vessel, and comprises means for distributing the pulses of flushing fluid to the lower portion of the bed of filtration material, in which arrangement the first vessel comprises an upper portion in a, by the hydrostatic pressure of the natural water source, driven water flow connection with the natural water source.

According to a preferred embodiment of the invention, the water pump is a submersible pump arranged in the second vessel, preferably at the beginning of the water pipe extending into the second vessel. However, it is also possible that the water pump is a suction pump connected to the water pipe downstream of the second vessel. Naturally, such a suction pump must be located at a level which is relatively close to the level of the surface of the natural water, in any case clearly less than 10 m from the level of the surface of the natural water.

According to a preferred embodiment of the invention, the second vessel is arranged inside the first vessel. In this case, the first and second vessels form a compact unit which is relatively easy to install in place, for example anchored to the bottom of the natural water used or attached to a wharf or a separate support structure made for the arrangement. In this embodiment, the water flow connection of the second vessel to the lower part of the first vessel can be preferably established by providing suitable openings in the lower part of the second vessel. According to another preferred embodiment, the second vessel is outside the first vessel, wherein the water flow connection to the lower part of the first vessel is provided by a separate pipe.

The flushing fluid used in the countercurrent flushing pulses of the filtration material is preferably air and/or water. Preferably, the pressure pulses of the countercurrent flushing are generated by the pressure of a pressure accumulator connected to the water pipe transferring the filtered water to its uses. On the other hand, the pressure pulses can also be produced by means of a separate pressure generating device, preferably a compressor. According to a preferred embodiment of the invention, the means for generating the flushing fluid pulses comprise a vent valve connected to the flushing fluid supply pipe and connected to the outdoor air pressure, which opens when the flushing fluid supply pipe pressure is lower than the outdoor air pressure. As a result, the portion of the flushing fluid supply pipe above the surface of the natural water is filled after each pulse by air which then functions as a part of the next flushing pulse of the flushing fluid.

The method of pre-filtrating a natural water transferring water pump according to the invention in a pre-filtrating arrangement described above comprises, in a first step, using the water pump to transfer water from the bottom of the bed of filtration material to the suction side of the water pump and further to a water pipe connected to the outlet side of the water pump, whereby solid impurities containing natural water passes through the bed of filtrating material, whereby at least a portion of the solid impurities are filtered into the bed of filtrating material. In a second step of the method, the water pump is stopped and a pressure pulse of flushing fluid is applied to the bottom of the bed of filtrating material, causing the bed of filtrating material to expand and at least some of the solid contaminants filtered into the bed of filtration material drift to the upper portion of the first vessel. In the first step of the method, the hydrostatic pressure of the natural water source drives the natural water containing solid impurities to the upper portion of the first vessel, and in the second step at least some of the solid contaminants drifted to the upper portion of the first vessel are flushed back to the natural water source.

Particular advantages of the invention over previously known methods of pre-filtrating water with a pre-filtrating device embedded in a natural water source include that, unlike separate filter cartridges or suction filters, the bed of filtrating material of the invention generally does not need to be replaced or taken out from the water for washing. Thus, the use of the filter arrangement according to the invention is easy and simple. The fact that according to the invention the natural water filtration arrangement is immersed in the natural water source has the advantage that it is not necessary to separately introduce raw water from the natural water source into the filtration arrangement. On the other hand, in the arrangements according to the invention, the impurities detached from the filtrating material in the countercurrent flushing do not have to be collected separately and transferred to post-treatment, but the impurities are simply returned to the natural water source. Thus, the countercurrent flushing of the sand bed according to the present invention is considerably simpler and easier to implement than conventional countercurrent flushing of the sand bed carried out in larger units.

The invention is described in more detail below with reference to the following exemplary embodiments of the invention. However, the invention is not limited to these embodiments, but the invention also encompasses various combinations of parts of all the described embodiments, and the scope of the invention is limited only by the appended claims.

### BRIEF DESCRIPTION OF THE DRAWINGS

The invention will now be described in more detail by means of exemplary embodiments thereof with reference to the accompanying drawings, in which
- Figure 1: shows a simplified and schematic, partly cross-sectional view of a preferred arrangement of pre-filtrating a natural water transferring water pump according to the invention.
- Figure 2: shows a simplified and schematic, partly cross-sectional view of another preferred arrangement of pre-filtrating a natural water transferring water pump according to the invention.

### DETAILED DESCRIPTION

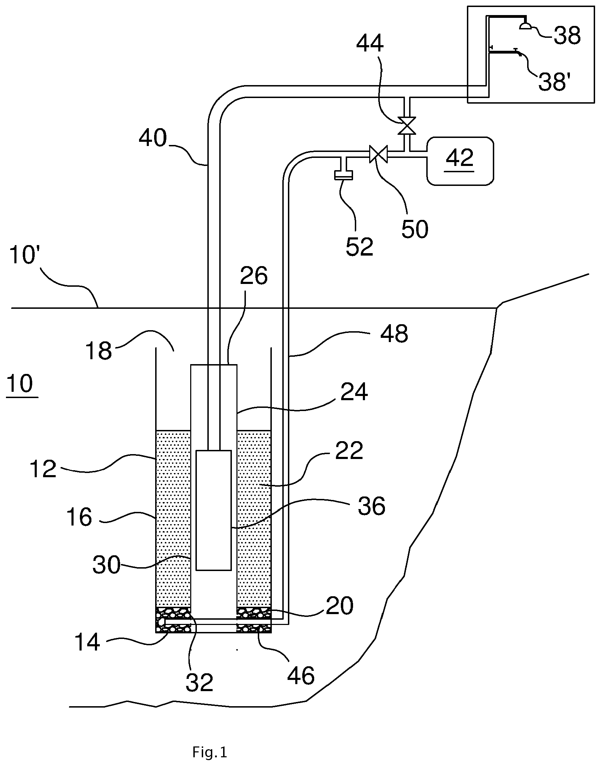

Figure 1 shows by way of example a preferred pre-filtrating arrangement of a natural water transferring water pump according to the invention. The arrangement shown in Figure 1 comprises a first vessel 12 embedded in a natural water source 10, for example a lake, sea or river, i.e. below the surface 10', the vessel comprising a watertight bottom 14 and a watertight side wall surface 16. According to the present invention the upper portion 18 of the first vessel is in a direct by the hydrostatic pressure of the of the natural water source driven water flow connection with the natural water source. This means in practice that when, for example, water, in this case filtered water, is removed from the lower part 20 of the first vessel, a corresponding amount of new water, i.e. raw water, flows from the natural water source 10 to the upper part 18 of the vessel 12. According to the solution shown in Fig. 1, the upper portion 18 of the first vessel 12 is completely open, but it is also possible that the upper portion of the vessel has, for example, a watertight lid and the upper portion of the side wall surface 16 has at least one opening through which water can flow freely into the upper portion of the vessel 12. According to a preferred solution, the upper portion of the side wall surface 16 has a plurality of openings which are evenly distributed on different sides of the side wall surface.

A bed of granular filtrating material, such as a sand bed 22, is provided in the lower portion of the first vessel, preferably on its bottom 14, for filtrating solid impurities in the water. The filtrating material can be ordinary, typically quartz or feldspar containing sand, but it can also be special material selected on the basis of the particular cleaning needs of the natural water to be used, such as crystalline quartz or zeolite, especially clinoptilolite. For the reason that becomes apparent from the explanation that follows, the first vessel is not completely filled with the filtration material, but a certain part of the vessel, for example 1/4 of the intact height of the side wall surface, i.e. of the height of the side wall surface or of the height below the openings in the side wall surface, is left unfilled.

The grain size of the filtration material is preferably selected so that the flow rate of water through the layer of filtration material is sufficiently high, but harmful solid particles in the water remain in the bed of filtration material. If the particle size is too small, the solids immediately remain in the upper layer of the bed, which means that the pressure drop in the bed increases rapidly and the need for cleaning the bed increases. According to a preferred solution, the effective grain size of the actual filtration material is about 0.6 mm, but the lower part 20 of the bed has a layer of coarser gravel or crushed stone with an effective grain size of more than 1 mm, typically 2-3 mm. The coarse material at the bottom of the bed helps to remove filtered water from the bottom of the bed, and on the other hand it enhances even distribution of countercurrent flushing pulses to the bottom of the bed.

In the solution according to Figure 1, a second vessel 24, which is watertight in respect of the natural water source, is arranged within the first vessel 12, centrally on its bottom 14. The second vessel comprises a roof 26 and a side wall surface 30, which is tightly connected to the side wall surface 30. Lower portion of the side wall surface advantageously comprises one or more openings or couplings 32 through which the lower portion of the second vessel is in water flow connection with the lower portion of the first vessel 12. According to a preferred solution, the second vessel has no bottom at all and the lower part of its side wall surface is fixed with a gap of 2-3 mm to the bottom of the first vessel, for example by welding at three points. As will be apparent to those skilled in the art, connecting the second vessel to the first vessel, and providing a water flow connection therebetween, can be done in a number of other ways. As the water enters the second vessel 24, as driven by the hydrostatic pressure, through the bed of filtration material 22 in the first vessel 12, the second vessel will be filled with filtered water.

In the solution of Figure 1, a submersible pump 36 is arranged inside the second vessel, to the outlet side of which is connected a water pipe 40 to transfer filtered water to its applications 38, 38 '. A pressure accumulator 42 is advantageously connected to the water pipe 40, which pressure accumulator has a lower pressure limit below of which the submersible pump is started and an upper pressure limit above of which the upper submersible pump is stopped. Because the control of the pressure accumulator and the water pump is well known to those skilled in the art, it is not described or illustrated in detail herein. There may be a shut-off valve 44 between the water pipe 40 and the pressure accumulator 42 which valve is open during normal operation of the water pump.

At the latest when the inflow of filtered water to the application starts to slow down disturbingly, it is advisable to perform a countercurrent flushing of the filtration material. The need for flushing depends on the amount of solid impurities in the natural water used. In some cases, flushing may be required many times a day, but when the natural water is very clean, it may be sufficient to perform the flushing every few months, for example. Depending on the situation, the start of the flushing can be controlled, for example, on the basis of the available water pressure or flow rate, or the flushing can be performed at regular intervals. According to a preferred embodiment, a countercurrent flushing is performed each time the suction pump stops.

In general, countercurrent flushing of the filtration material can be accomplished by stopping the intake of water and applying a sufficiently high water and/or air pulse or pulses to the bottom of the bed. To this end, a flushing fluid supply device 46 is provided in the lower portion of the first vessel, preferably in the area of the coarse bed arranged in the lower portion, for example a hollow ring with fluid injection openings into which the necessary water or air pulses can be introduced via a flushing fluid supply pipe 48.

Each flushing pulse causes the bed of filtration material to expand, typically by up to 30-40% of its volume, and the solid particles accumulated in the filtration material travel back to the surface of the bed. Preferably, the height of the bed of filtration material is selected so that with the countercurrent flushing pulses used, the top surface of the bed rises almost flush with the top edge of the first vessel. Thereby, at least a major portion of the particles transported to the surface of the expanded bed spread relatively quickly back to the natural water source. When water intake takes place in a waving or flowing water, such as a sea or river, the spread can occur almost immediately. Instead, when taking water in calm and stagnant water, it may be necessary to wait a sufficient time, for example half a minute, after the flushing pulse or pulses, before restarting the water intake. In addition, after the flushing pulse or pulses, it is also advisable to wait for the sand bed to settle before restarting the water intake.

In the solution shown in Figure 1, the countercurrent flushing pulses are generated by means of the pressure accumulator 42. To generate the pulses, the valve 44 between the water pipe 40 and the pressure accumulator 42 is closed and the valve 50 between the pressure accumulator and the flushing fluid supply pipe 48 is opened. Thereby, the high pressure water in the pressure accumulator 42 generates a flushing pulse through the flushing fluid supply pipe 48 and the supply device 46 to the bottom of the bed of filtration material. In some applications, for example, when the water tube 40 has, in addition to the pre-filtrating arrangement described herein, a reverse osmosis filter prior to use of the filtered water 38, 38 ', it may be possible to leave the valve 44 open during the pulses, or the valve 44 may be omitted from the arrangement. In some applications, a second pressure vessel, not shown in Figure 1, may also be connected to the water pipe 40, the purpose of the second pressure vessel being to ensure sufficient water pressure in the water pipe 40 even when the valve 44 is closed to generate flushing pulses.

Preferably, the flushing tube is connected to the outside air by a vent valve 52 which operates so that when the valve 50 is closed again after the pulse and the water remaining in the supply pipe tends to drain to the bottom of the filter bed, the vacuum valve 52 opens, and the portion of the supply tube 48 above the surface 10' of the water source 10 is filled with air. When the next flushing pulse again increases the pressure in the supply pipe 48, the vent valve closes, causing the flushing pulse to push the water and air in the supply pipe into the lower part of the filtration material bed, which increases the volume of the flushing pulse and enhances its effect.

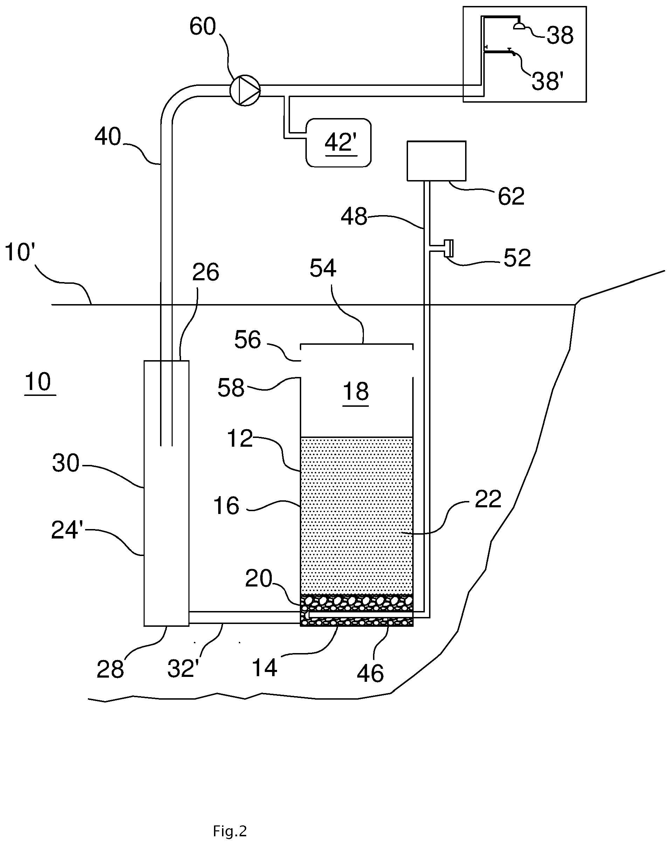

Fig. 2 shows by way of example another preferred pre-filtrating arrangement of natural water transferring water pump according to the invention, in which the first embodiment shown in Fig. 1 has been modified in several different ways. In practice, various embodiments of the invention may be practiced using only one or more of these modifications, or all of them simultaneously. Features of the invention that are substantially similar to the embodiments of the invention shown in Figures 1 and 2 are denoted by the same reference numerals in both figures. Such similar features are generally not described in the description below. When the effect of a feature is substantially similar in the embodiment of Figure 2 as in the embodiment of Figure 1, but its implementation is clearly different, an apostrophe is appended to the reference number of the feature in Figure 2.

In the embodiment of the invention shown in Figure 2, the upper portion 18 of the first vessel 12 is not open but is covered by a roof structure 54. In order for the natural water to flow substantially unobstructed into the upper part 18 of the first vessel, a sufficient number of openings 56 are provided in the upper part of the side wall surface 16 of the first vessel. In order for the filtrating material bed 22 of the first vessel to rise during the countercurrent flushing pulses near the level of the lower edge 58 of the openings 56, the height of the filtrating material bed is selected so that when filtrating water the height of the bed is sufficiently, e.g., about 25%, lower than the height of the side wall 16 of the first vessel below the lower edge 58 of the openings.

Another modification of the embodiment of the invention shown in Figure 2 with respect to the embodiment of the invention shown in Figure 1 is that the second vessel 24' is not inside the first vessel 12, but adjacent to it, as a separate vessel. The second vessel 24' shown in Figure 2 differs from the second vessel 24 shown in Figure 1 in particular in that it also has a watertight bottom 28. Due to this geometry, the water flow connection between the first vessel 12 and the second vessel 24' is provided by a separate pipe 32' connecting the lower portion of the first vessel to the lower portion of the second vessel.

A third modification of the embodiment of the invention shown in Figure 2 with respect to the embodiment of the invention shown in Figure 1 is that the submersible pump 36 is replaced by a suction pump 60 mounted on the water pipe 40. The outlet side of the suction pump advantageously comprises either a conventional pressure accumulator 42' or a pressure accumulator 42 for generating pulses for countercurrent flushing as explained in connection with the Figure 1. The beginning of the water pipe 40 in the Figure 2 is inside the second vessel 24 ', which second vessel in this case only serves as a storage for filtered water. In some applications, it may also be possible for the water pipe 40 to be in direct water flow communication with the lower portion of the first vessel, whereby the beginning portion of the water pipe 40 acts as the second vessel of the arrangement.

A fourth modification of the embodiment of the invention shown in Figure 2 with respect to the embodiment of the invention shown in Figure 1 is that the countercurrent flushing pulses are generated by a separate pulse device 62, for example an air compressor, connected to the flushing fluid supply pipe 48. Again, the supply pipe may advantageously comprise a vent valve 52 connected to the outside air pressure, by means of which the filtered water can rise to the flushing fluid supply pipe 48 after the pulse, which improves the flushing efficiency of the next pulse.

As stated above, the embodiments described in connection with Figures 1 and 2, and modifications thereof, are independent of each other in the sense that various new preferred combinations can be formed by combining them or omitting features, respectively. There are also many other features associated with the use of the various embodiments of the invention that are known per se to those skilled in the art and are therefore not described in this specification. One such is that the pre-filtrating arrangements described are preferably suitably attached to their surroundings, for example anchored to a bottom or attached to a suitable structure above the surface. The arrangement described above removes mainly solid impurities from the water, which is why in many cases it is necessary to connect other filtration devices between it and the uses of the water.

## Claims

1. A pre-filtrating arrangement of a natural water transferring water pump (36, 36 ') comprising
- a first vessel (12) immersed in a natural water source (10), preferably a lake, sea or river, comprising a watertight bottom (14) and a watertight side wall surface (16) and a bed (22) of granular filtration material arranged in the lower portion (20) of the first vessel, preferably a sand bed,
- a second vessel (24) watertight relative to the natural water source, having a roof (26) and a side wall surface (30), the second vessel being in water flow connection with the lower portion of the first vessel (12),
- a water pump (36, 36 ') for passing filtered water from the first vessel (12) via said water flow connection to the second vessel (24) and further from the second vessel along a water pipe (40) to water use (38, 38'),
- a countercurrent flushing arrangement of the bed of filtration material, comprising a flushing fluid supply pipe (48) having means for generating flushing fluid pulses (42, 62, 52) connected to the first end, and the second end of which being fluid flow connection with the first vessel (12), and means (46) for distributing the pulses of flushing fluid to the lower portion of the bed of filtration material,
**characterized in that** the first vessel comprises an upper portion (18) which is in a by the hydrostatic pressure of the natural water source driven water flow communication with the natural water source (10).

2. A pre-filtrating arrangement of a natural water transferring water pump (36) according to claim 1, **characterized in that** the water pump is a submersible pump arranged in the second vessel (24, 24 ').

3. A pre-filtrating arrangement of a natural water transferring water pump according to one of the preceding claims 1 or 2, **characterized in that** the second vessel (24) is arranged inside the first vessel (12).

4. A pre-filtrating arrangement of a natural water transferring water pump according to one of the preceding claims 1 to 3, **characterized in that** the flushing fluid is air and/or water.

5. A pre-filtrating arrangement of a natural water transferring water pump according to one of the preceding claims 1 to 4, **characterized in that** the means for generating pulses for the flushing fluid comprise a vacuum valve (52) connected to the flushing fluid supply pipe (48) in connection to the outside air pressure.

6. A pre-filtrating arrangement of a natural water transferring water pump according to one of the preceding claims 1 to 5, **characterized in that** the height of the bed (22) of granular filtration material arranged in the lower portion (20) of the first vessel is about 25% lower than the intact height of the side wall (16) of the second vessel.

7. A method of pre-filtrating a natural water transferring water pump in a pre-filtrating arrangement according to any one of claims 1 to 6, wherein in the first step of the method
- using a water pump to transfer water from the lower portion of the bed of filtration material arranged in the first vessel to the suction side of the water pump (36, 36 ') and further to the water pipe (40) connected to the outlet side of the water pump, whereby
- natural water containing solid impurities passes through the bed of filtration material, whereby at least some of the solid impurities are filtered into the bed of filtration material,
and in the second step of the method
- the water pump (36, 26 ') is stopped, and
- applying a pressure pulse of flushing fluid to the lower portion of the bed of filtration material, whereby the bed of filtration material expands and at least a portion of solid impurities filtered into the bed of filtration material drift to the upper portion of the first vessel (18),
**characterized in that**
- in the first stage, the hydrostatic pressure of the natural water source (10) drives the natural water containing solid impurities to the upper portion of the first vessel (12), and
- in the second stage, at least a portion of the solid impurities drifted to the upper portion of the first vessel are flushed back into the natural water source.
